# EUROPEAN PATENT SPECIFICATION

(11) **EP 0 875 687 B1**
(45) Date of publication and mention of the grant of the patent: **16.07.2003**
(21) Application number: 98104247.6
(22) Date of filing: 10.03.1998
(51) Int. Cl.: F16D 1/00, F16D 43/286, F16D 43/206, F16D 25/08

(54) **Torque limiting clutch**
Drehmoment-Bregrenzungs-Kupplung
Embrayage limiteur de couple

(30) Priority: 30.04.1997 IT BO970074 U
(43) Date of publication of application: 04.11.1998
(73) Proprietor: O.M.C. S.n.c. di DANTE CAVALLI & C., 40055 Villanova di Castenaso (Bologna) (IT)
(72) Inventor: Cavalli, Dante, 40055 Villanova Di Castenaso, Bologna (IT)
(74) Representative: Lanzoni, Luciano

(56) References cited:
- EP-A- 0 283 424
- EP-A- 0 335 687
- EP-A- 0 651 171
- DE-A- 3 232 182
- DE-B- 1 230 627
- GB-A- 544 230
- GB-A- 2 100 370
- GB-A- 2 286 639
- US-A- 2 963 134
- US-A- 3 298 488
- US-A- 4 934 500
- PATENT ABSTRACTS OF JAPAN vol. 12, no. 495 (M-780), 23 December 1988 & JP 63 214523 A (DAIKIN), 7 September 1988

## Description

The present invention relates to a transmission clutch with limitation of the torque that may be transmitted controlled by an operating fluid under pressure.

Transmission clutches with torque limitation of the known type consist of a pair of coaxial hubs which may be rigidly connected to the driving and driven shafts and having elements for transmission of the torque and corresponding seats on their opposite, that is to say, contact surfaces. Alternatively, or in combination with the said torque transmission elements, the two hubs may have complementary teeth which aid or substitute the torque transmission elements.

The hubs are held against one another by the operating fluid, which keeps the torque transmission elements housed in the respective seats.

An example of these clutches is described in patent US-A-2 963 134.

This patent describes a torque limiter clutch held in the engaged condition by a fluid under pressure which acts upon a piston that has two active faces.

This clutch has the disadvantages of being impossible to re-engage using the fluid under pressure and of having a complex structure and a high consumption of the fluid under pressure.

Another example of these clutches is given in EP-283424 which is considered the closest prior art. An overload clutch has an axially moveable ring with cavities seating torque transmitting balls retained in seating cavities in a sheave mount, the cavities being larger than the cavities.

The balls may be retained on the sheave mount either by a cage with tapered holes or by a carrier ring with clearance holes and a retaining plate.

The ring may be moved by fluid pressure in a cylinder overcoming the reaction of springs.

Attempts were, therefore, made to improve the functioning of the known types of clutches, by creating a clutch with simple structure that can be disengaged or re-engaged by means of the fluid under pressure.

For this purpose, a clutch according to claim 1 or claim 13 is provided.

Being of the single acting type, the linear drive unit has a simple construction. The elastic means or the second pressing means which oppose the action of the drive unit also allow the drive unit to be moved in the opposite direction.

In a first embodiment, the elastic means keep the hubs in the engaged position and the drive unit allows hub disengagement. Disengagement of the hubs is aided by second pressing means located between the two hubs.

In a second embodiment, the linear drive unit keeps the hubs in the engaged condition and the second pressing means allow hub disengagement. In the latter embodiment, the elastic means attached to the linear drive unit are absent and, the function of opposing the action of the linear drive unit is assumed directly by the second pressing means.

According to the invention, the linear drive unit comprises a device which allows an increase in the force, developed by the fluid under pressure, with which the linear drive unit holds the hubs in the engaged condition.

In yet another embodiment according to the invention, the linear drive unit comprises a device which allows an increase in the force, developed by the fluid under pressure, with which the linear drive unit disengages the hubs.

Other characteristics and advantages of the present invention are described in the dependent claims herein.

The invention is described in more detail below, with reference to the accompanying drawings, which illustrate preferred embodiments, according to the invention and embodiments for better understanding the invention, without restricting the scope of the invention, and in which:
- Figure 1 is an axial section of the torque limiter clutch disclosed;
- Figure 2 is an axial section of a variation on the torque limiter clutch in Figure 1;
- Figure 3 is a cross-section of the torque limiter clutch along line III-III in Figure 2;
- Figure 4 is an axial section of an alternative embodiment of the torque limiter clutch;
- Figure 5 is a cross-section of the torque limiter clutch along plane S in Figures 1 and 4, with some parts cut away to better illustrate others;
- Figure 6 is an axial section of an embodiment according to the invention of the torque limiter clutch, fitted with a device which increases the force of the pressing means; and
- Figures 7 and 8 are schematic illustrations of another two embodiments of the device which increases the force of the pressing means.

With reference to the accompanying drawings, the torque limiter clutch disclosed is operated by a fluid under pressure and consists of two hubs 1 and 2, which can be keyed in the known manner to two coaxial shafts, not illustrated. The hubs 1 and 2 have a plurality of torque transmission elements 3 and corresponding seats 4. The hub 1 is pushed towards the plane of separation S of the two hubs 1 and 2 by first pressing means 6 and in such a way that a driving torque is transmitted.

The torque transmission elements 3, shown by way of example as rollers 3, are housed in respective seats with the possibility only of idle rotation about their axes, positioned along directions radial to the hub to which they are attached.

Obviously, the rollers 3 may be substituted with equivalent elements, for example, a set of bearings with relative housing. Moreover, the radial positioning of the elements 3 relative to the clutch is not restrictive, since various oblique or axial positions are also possible.

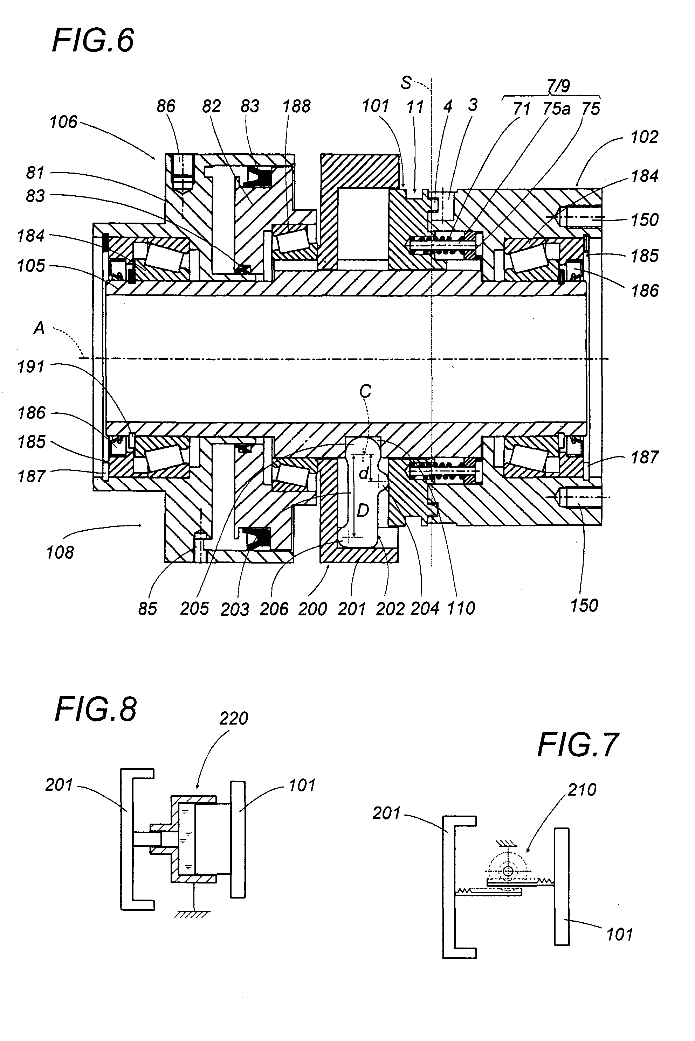

Figure 5 illustrates an example of a clutch in which the torque transmission elements 3 and respective seats 4 are positioned at various angles, meaning that the elements 3 and seats 4 may be aligned with one another only for a precise value of relative rotation of the two hubs 1 and 2.

In the specific case illustrated in Figure 5, the seats 4, and the relative positions of the elements 3, are such that they allow re-engagement of the hubs only following a complete turn, equalling 360 degrees.

The angles at the centre, expressed in sexagesimal degrees, between the axes of each pair of adjacent seats 4 are consecutively equal to: 106, 29, 94, 49, 69, 13.

The angle at the centre corresponding to the width of the seat 4 measured at the smaller diameter of the seat is between 9 and 12 sexagesimal degrees, depending on the size of the clutch, and is never greater than 15 degrees. This particular configuration always allows optimum contact between the two hubs 1 and 2 if the hubs are disengaged when the torque that may be transmitted is exceeded and if the pressing means 6 continue to act upon the hubs. In this condition, the hubs always make contact with one another in at least three points, that is to say, at least at three torque transmission elements 3.

As shown in Figure 5, the maximum angle for contact between two torque transmission elements 3, under the worst conditions, is 143 sexagesimal degrees.

However, the torque transmission elements 3 and seats 4 may also be separated by equal angles, for example with six elements 3 positioned at a relative angle of 60 sexagesimal degrees. As a result, the clutch can only re-engage after a fraction of relative rotation of the hubs 1, 2 equal to the individual angle (in this case 60 degrees) between the elements 3 and seats 4.

The hub 2 is divided into two parts 2a, 2b so that it can be fitted on a flange 51 on a central support 5. The hub 2 is fixed axially, yet can rotate about the axis A, thanks to two thrust bearings 21, 22 and a radial bearing 23 keyed to the central support 5.

The centre section of the support has a splined section 52, upon which the hub 1 can slide axially, being set at the same angle as the central support 5. The external surface of the hub 1 has a groove 11 which, when the torque that may be transmitted has been exceeded and the hub has completed its axial movement, allows the activation of suitable control and warning means.

The first pressing means 6 are fitted on the end of the central support 5 opposite that upon which the hub 2 is mounted.

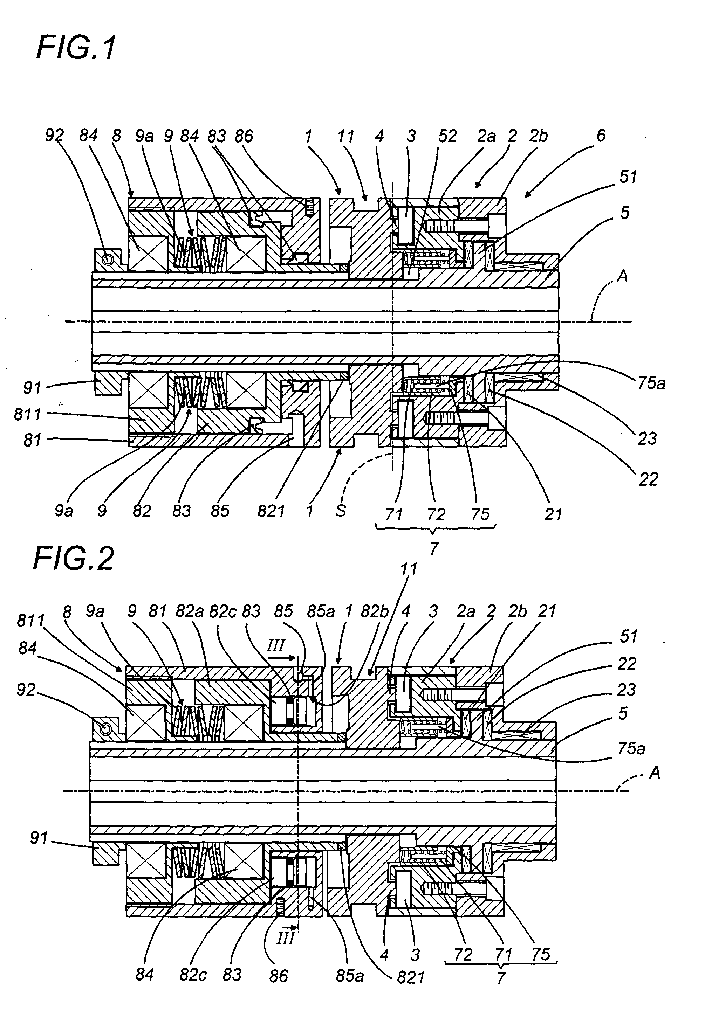

In a first embodiment, illustrated in Figure 1, the first pressing means 6 comprise a linear drive unit 8 with a cylinder 81 which slides axially on the support 5 thanks to adjusting means consisting of notched ring nut 91 which screws onto a threaded part of the support 5. A screw 92 allows the ring nut 91 to be locked at an angle. Inside the cylinder 81, a ring-shaped piston 82 slides axially, the seal being guaranteed by two seals 83.

The cylinder 81 and piston 82 are mounted on two bearings 84 which slide axially on the support 5.

In this way, the support 5 is free to rotate relative to the cylinder 81 and piston 82, which remain fixed and are prevented from rotating.

Between the base 811 of the cylinder 81 and the piston 82, elastic means 9 are envisaged, in the example illustrated in Figures 1 and 2 consisting of a set of Belleville washers 9a. These Belleville washers 9a may be substituted with other suitable types of spring, for example a helical spring attached to the support 5 or a set of helical springs with axes parallel with the axis A and positioned around the support 5.

The ring-shaped piston 82 has a tab, also ring-shaped, at the end of which is a ring of anti-friction material or a roller bearing 821. This end acts upon the hub 1 in such a way as to keep it engaged with hub 2. The axial movement of the cylinder 81 by means of ring nut 91 allows a variation in the preloading force of the springs 9a, therefore, of the force with which the piston 82 acts upon the hub 1. The torque that may be transmitted by the clutch can be increased or reduced by tightening or slackening the ring nut 91.

The outside of the cylinder 81 has a threaded blind hole 86, which acts as a fastening to prevent rotation of the cylinder 81, and a through hole 85 to the inside of the cylinder, allowing the fluid under pressure to act on the piston 82.

In the embodiment illustrated in Figure 1, the fluid moves the piston 82, acting against the force of the springs 9a so as to disengage the hub 1 from hub 2. It should be noticed that the torque which may be transmitted is not influenced by the pressure of the fluid.

To aid disengagement of hub 1 from hub 2, second pressing means 7 are envisaged. These means 7 consist of a set of springs 71 held by a spring guide 72. The latter consists of a cylindrical sleeve with axial holes 72a in which the springs 71 can slide.

To vary preloading of the springs 71, adjusting means 75 are envisaged. In the embodiment illustrated these are created using at least one ring 75 of suitable thickness. The ring has pins 75a, parallel with the axis A, around which the springs 71 are attached and which help to guide the springs.

One end of the axial holes 72a has a hole 72b with a smaller diameter, to allow the passage of the pins 75a and form a support for the springs 71.

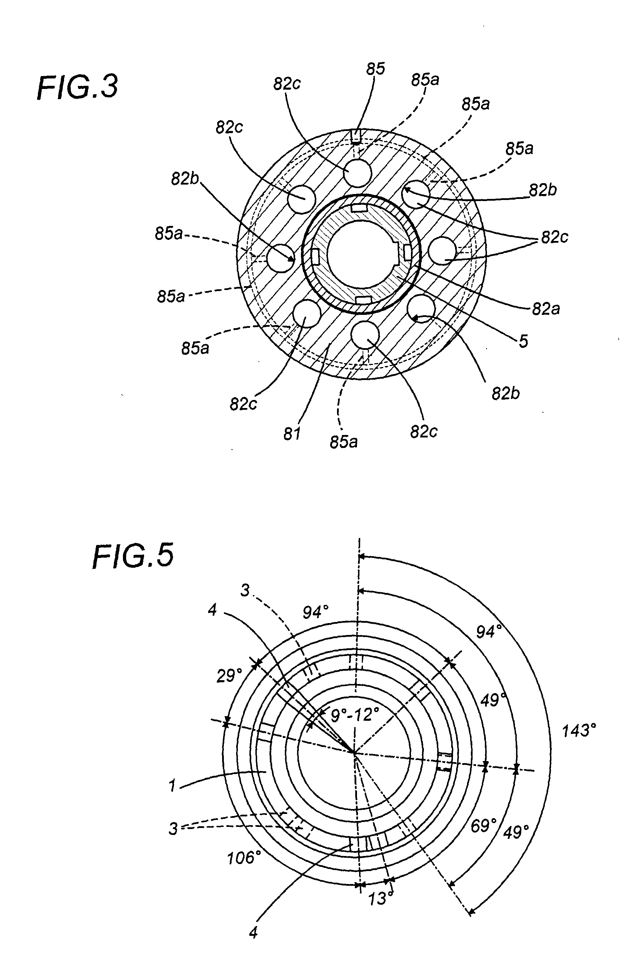

In the embodiment illustrated in Figures 2 and 3, the cylinder 81 and ring-shaped piston 82 unit is substituted with a plurality of cylinders 82b, pistons 82c with relative seals 83. The axes of the cylinders are parallel with the axis A and the cylinders are evenly positioned about the support 5. The pistons 82c act upon a ring-shaped element 82a, which has a ring-shaped tab with anti-friction ring 821. The ring-shaped element 82a acts upon the hub 1 in a similar way to the piston 82 in the example illustrated in Figure 1. Tubes 85a made inside the body of the cylinder 81 are envisaged to distribute the fluid under pressure to the cylinders 82b.

All other features of the functioning of this embodiment are identical to those of the embodiment illustrated in Figure 1.

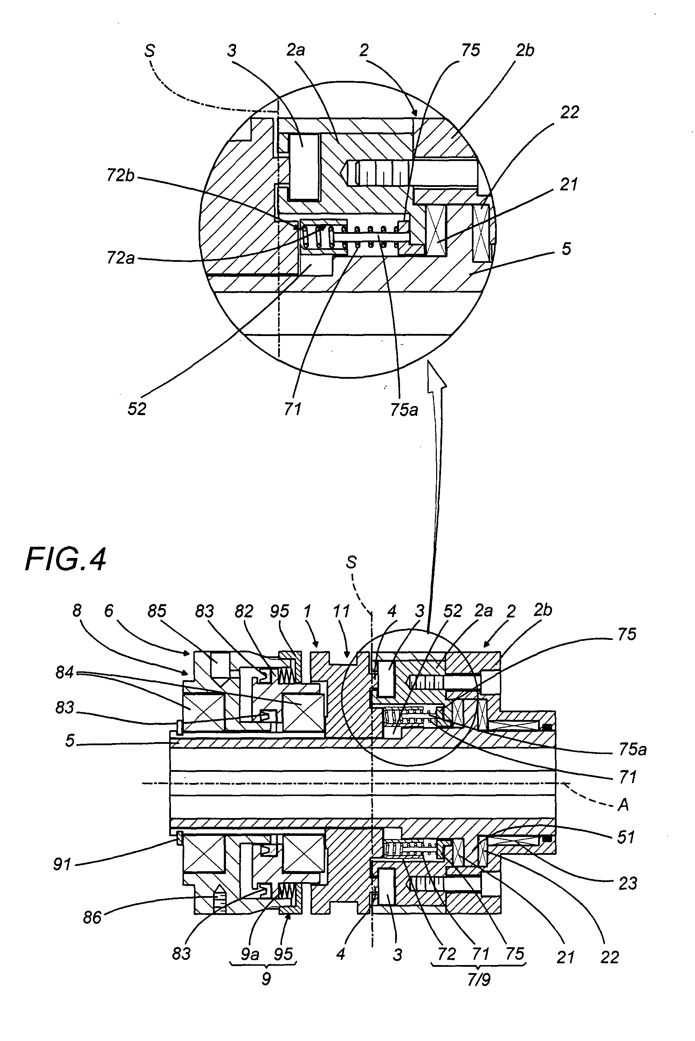

In the embodiment shown in Figure 4, the ring-shaped piston acts, by means of the bearing 84, on hub 1. In this case, the force developed by the action of the fluid under pressure holds the hub 1 in contact with hub 2, allowing transmission of the driving torque. Unlike the embodiment illustrated in Figure 1, the driving torque that can be transmitted by the clutch is, therefore, a function of the pressure of the fluid which acts upon the piston 82.

When the clutch must be disengaged, the supply of fluid under pressure can simply be stopped, interrupting the action of the piston 82 on the hub 1. Following this manoeuvre, the elastic means 9, consisting of the springs 9a, return the piston 82 to the disengaged position. The second pressing means 7 also move the hub 1 to a condition in which it is substantially disengaged from the hub 2 and, therefore, the transmission of motion is interrupted.

To adapt to the various pressure values of the fluid and to modify the response speed when the clutch is disengaged, the preloading force of the springs 9a can be adjusted using a threaded ring nut 95.

In another embodiment, not illustrated, the elastic means 9 are absent and their function is assumed by the second pressing means 7. Since the action of the elastic means 9 is the same as that of the second pressing means 7, the latter return the piston 82 to the clutch disengaged condition by means of hub 1.

Again in the latter embodiment, and in that shown in Figure 4, the ring-shaped cylinder 82 may be substituted with a set of small cylinders whose axes are parallel with the axis A, in accordance with an embodiment, not illustrated, substantially similar to that shown in Figures 2 and 3. In this case, in contrast to the case in the above-mentioned Figures 2 and 3, the action of the fluid under pressure on the small cylinders will move the hub 1 to the condition in which it engages with hub 2.

Figure 6 shows a variation on the torque limiter clutch which is according to the invention, with some parts similar to those of the clutches described so far. Therefore, the numerals used to label elements already described will remain the same, whilst new or modified elements will be labelled with new numerals.

The clutch in Figure 6 comprises a first hub 101, which slides axially relative to a central support 105, and a second hub 102. Between the first and second hubs 101, 102 there is a plurality of torque transmission elements 3 and corresponding seats 4.

The hub 101 is pushed towards the plane of separation S of the two hubs 101 and 102 by first pressing means 106.

Like the previous embodiments, the hub 101 is mounted on the central support 105 in such a way that cannot rotate but is free to move axially relative to the central support 105, for example, by means of a splined section.

The hub 102 is a single part and is axially fixed, although free to rotate about the axis A relative to the central support 105. The hub 101 and 102 assembly is mounted on two tapered roller bearings 184, which in turn rest on the central support 105 and are fixed to the latter by elastic safety rings 191 (for example, snap rings). The bearings 184 also assume the function of axial thrust bearing for the hub 102 and for the first pressing means 106. The bearings 184 are in turn protected from atmospheric agents by two rings 185, fixed with elastic rings 187 and are fitted with seals 186.

The external surface of the hub 101 has a groove 11 which, when the torque that may be transmitted has been exceeded and the hub has completed its axial movement, allows the activation of suitable control and warning means.

In a first variation according to the invention, illustrated in Figure 6, the first pressing means 106 comprise a linear drive unit 108 and a device 200 which increases the force supplied by the linear drive unit 108.

The unit 108 comprises a cylinder 81 in which a ring-shaped piston 82 slides axially with a seal 83. A fluid under pressure passes through the feed tube 85 and presses on the ring-shaped piston 82.

The latter has a bearing 188 which, by means of the device 200 which increases the force, acts upon the hub 101, keeping it in the condition in which it is engaged with hub 102, allowing transmission of the driving torque.

The device 200 which increases the force comprises a bell 201 and at least one lever device 202. The bell 201 has a splined section which matches the splined section of the central support 105, so that it can rotate with the support 105 and slide axial to it, as does the hub 101.

The lever device 202 comprises a lever 203, preferably at least two levers 203, arranged radially inside the bell 201 in such a way that they can turn about one of their own rounded ends 205, which is housed in a seat 110 in the central support 105.

The lever 203 also comprises a projection 206 at the end opposite the said end 205, and an intermediate projection 204. Projection 206 makes contact with the inner wall of the bell 201, whilst projection 204 makes contact with the hub 101.

The rounded end 205 and the two projections 204 and 206 are arranged in such a way as to make the lever 203 a lever of the second class.

In fact, projection 204 is at a shorter distance d from the fulcrum, considered to be at the centre C of the rounded end 205, compared with the distance D of projection 206 from the fulcrum. In this way, the force acting upon projection 206 is correspondingly increased in accordance with the ratio between distances D and d.

As illustrated in Figure 6, it may be noticed that the lever 203 receives on projection 206 the force relative to the cylinder 81, from the bell 201, and returns the increased force to the hub 101 by means of projection 204.

Various ratios between distances D and d are possible, all of them within the scope of the inventive concept.

In a preferred embodiment, the ratio between distances D and d is three, therefore, the force developed by the cylinder 81 is tripled.

As a result, even the axial movement of the piston 82 of the cylinder 81 is tripled. This does not create particular problems, since the axial movement of the hub 101 necessary for disengagement of the clutch is very limited, therefore the axial movement of the piston 82 also remains limited.

This device for increasing the force, therefore, makes it possible to solve the problem of transmitting high levels of torque even if the pressure of the operating fluid which controls the cylinder 81 is low. The cylinder 81 may, therefore, be more compact and the clutch as a whole is smaller than similar clutches able to transmit the same level of driving torque.

It should be noticed that the lever device 202 is only an example of embodiment according to the invention which increases the force, and that different embodiments, both mechanical and hydraulic, are described for better understanding the invention.

For example, as schematically illustrated in Figure 7, the levers 203 may be substituted with a mechanism 210 which has two pinions with different diameters that act upon corresponding racks in such a way that the force from the bell 201 is increased on the hub 101 to a degree corresponding with the ratio between the diameters of the pinions.

In the example schematically illustrated in Figure 8, the device which increases the force consists of a hydraulic device 220 which functions according to the hydraulic press principle. In this case, the bell 201 acts upon a hydraulic piston whose diameter is smaller than the diameter of a hydraulic piston which acts upon the hub 101.

The two pistons are hydraulically connected to one another so that the motion is transmitted in linear fashion. The value of the ratio between the thrust surface of the piston with the larger diameter and the thrust surface of the piston with the smaller diameter corresponds to the value by which the force of the bell 201 is increased on the hub 101.

To make the response of the linear drive unit 108 faster, elastic means 9 may be envisaged, not illustrated in Figure 6, but substantially similar to those illustrated in Figure 4, consisting of springs 9a, which return the piston 82 to the disengaged condition.

If the elastic means 9 are absent, as shown in Figure 6, the second pressing means 7 also assume the function of the means 9, that is to say, they move the piston 82 towards the clutch disengagement position.

Again in this embodiment the ring-shaped cylinder 82 may be substituted with a set of small cylinders with axes parallel with the axis A.

In another variation according to the invention, not illustrated, the clutch is kept in the engaged condition by adjustable elastic means, such as the Belleville washers 9a illustrated in Figures 1 and 2 and is fitted with a linear drive device, for example a ring-shaped cylinder (as shown in Figure 1), or a set of small cylinders arranged around the axis A (as shown in Figure 2).

The clutch in the latter variation is also fitted with a device which increases the force, of the type labelled 200 in Figure 6. The problem to be solved for this clutch is similar to that solved by the clutch in Figure 6.

To transmit high levels of torque, the force developed by the elastic means, that is to say, the cup springs, must be correspondingly high. It is, therefore, difficult to disengage the clutch by means of the cylinder operated by the fluid when the fluid pressure is reduced.

The device which increases the force, like that labelled 200 in Figure 6, allows the disengagement force of the cylinder operated by the fluid to be increased, so that it can overcome the action of the elastic means.

Again in this case the overall dimensions of the clutch are smaller than those of similar clutches able to transmit the same level of torque, but not fitted with the device which increases the force.

## Claims

1. A torque limiter clutch operated by a fluid under pressure, having a first, engaged operating position and a second, free rotation operating position, comprising a driving hub and a driven hub (1, 2; 101, 102), these being positioned on a central support (105) in such a way that they rotate together about the same axis (A), and being held against one another in such a way as to transmit a driving torque by means of torque transmission elements (3), said elements (3) being carried by one of the two hubs (1; 2; 101; 102) and pushed in the direction of the plane of separation (S) of the two hubs by first pressing means (6; 106) in respective seats (4) in the other hub (2; 1; 102; 101), the first pressing means (6; 106) comprise a single acting linear drive unit (8; 108), the latter being operated by a fluid under pressure and developing a force proportional to the pressure of the fluid, elastic means (9), operatively associated to said linear drive unit (8) in such a way that they can oppose the action of the latter, the clutch being **characterized in that** it comprises a device (200) for increasing the force developed by the drive unit (108), the device (200) comprising a bell (201) axially slidable on the central support (105), associated to the drive unit (108), at least one lever (203) rotatable about a centre or fulcrum (C) defined by one of its ends (205) positioned in a seat (110) in the central support (105), the latter being fixed relative to the hub (101) and the bell (201), and **in that** the end opposite the end (205) comprises a projection (206), this projection (206) being operatively associated to the bell (201) and there being an intermediate projection (204), operatively associated to the hub (101).

2. The clutch according to claim 1, **characterized in that** the ends of the lever (203) and the intermediate projection (204) are rounded.

3. The clutch according to claims 1 or 2, **characterized in that** it comprises second pressing means (7), these being positioned between the hubs (1, 2; 101, 102) in such a way as to hold the hubs in a substantially disengaged condition.

4. The clutch according to one of the foregoing claims, **characterized in that** the effect of actuating the linear drive unit (8; 108) disengages the hubs (1, 2; 101, 102).

5. The clutch according to one of the claims from 1 to 3, **characterized in that** the effect of actuating the linear drive unit (8; 108) engages the hubs (1, 2; 101, 102).

6. The clutch according to one of the claims from 1 to 5, **characterized in that** the linear drive unit (8; 108) comprises at least one cylinder (81) and one piston (82).

7. The clutch according to claim 6, **characterized in that** the linear drive unit (8; 108) comprises a ring-shaped cylinder (81), inside which a relative ring-shaped piston (82) slides.

8. The clutch according to claim 6, **characterized in that** the linear drive unit (8; 108) comprises a plurality of cylinders (82b), inside which relative pistons (82c) slide.

9. The clutch according to according to one or more of the foregoing claims, **characterized in that** the projection (206) is spaced apart from the fulcrum (C) by a distance D, that the projection (204) is spaced apart from the fulcrum (C) by a distance d, and that distance D is greater than distance d.

10. The clutch according to claim 9, **characterized in that** the distance D spacing apart the projection (206) from the fulcrum (C) is three times the distance d separating the projection (204) from the fulcrum (C).

11. The clutch according to claims 1 or 2, **characterized in that** the elastic means (9) consist of at least one spring (9a) acting directly upon the pistons (82; 82c).

12. The clutch according to claim 3 or according to one of the claims from 4 to 10, when claims 4 to 10 depend on claim 3, **characterized in that** the second pressing means (7) consist of at least one spring (71) inserted in a spring guide (72).

13. A torque limiter clutch operated by a fluid under pressure, having a first, engaged operating position and a second, free rotation operating position, comprising a driving hub and a driven hub (1, 2; 101, 102), these being positioned on a central support (105) in such a way that they rotate together about the same axis (A), and being held against one another in such a way as to transmit a driving torque by means of torque transmission elements (3), said elements (3) being carried by one of the two hubs (1; 2; 101; 102) and pushed in the direction of the plane of separation (S) of the two hubs by first pressing means (6; 106) in respective seats (4) in the other hub (2; 1; 102; 101), the first pressing means (6; 106) comprise a single acting linear drive unit (8; 108), the latter being operated by a fluid under pressure and developing a force proportional to the pressure of the fluid, second pressing means (7) positioned between the hubs (1, 2; 101, 102) in such a way as to hold the hubs in a substantially disengaged condition and acting in opposite direction to the action of the linear drive unit (8; 108), the clutch being **characterized in that** it comprises a device (200) for increasing the force developed by the drive unit (108), the device (200) comprising a bell (201) axially slidable on the central support (105), associated to the drive unit (108), at least one lever (203) rotatable about a centre or fulcrum (C) defined by one of its ends (205) positioned in a seat (110) in the central support (105), the latter being fixed relative to the hub (101) and the bell (201), and **in that** the end opposite the end (205) comprises a projection (206), this projection (206) being operatively associated to the bell (201) and there being an intermediate projection (204), operatively associated to the hub (101).

14. The clutch according to one of the claims 1 to 3, or 5 to 10, **characterized in that** the action of the elastic means (9) opposes the action of the linear drive unit (8; 108) through the hub (1; 101).

15. The clutch according to one of the foregoing claims, **characterized in that** the first pressing means (6; 106) have adjusting means (91, 92; 95) to vary the preloading force of the elastic means (9).

16. The clutch according to claim 3 or according to one of the claims from 4 to 10, when claims 4 to 10 depend on 3, or according to claims 13 or 15, **characterized in that** the second pressing means (7) have adjusting means (75) to vary their own pressing force.

17. The clutch according to one of the foregoing claims, **characterized in that** the torque transmission elements (3) and relative seats (4) are positioned in such a way that the angles at the centre, being expressed in degrees, between the axes of each pair of adjacent elements (3) or seats (4) are consecutively equal to 106, 29, 94, 49, 69, 13, the size of the angle at the centre of the seats (4) measured at the smaller diameter being less than 15 degrees and preferably between 9 and 12 degrees.

## Patentansprüche

1. Drehmomentbegrenzungskupplung, betätigt durch eine unter Druck stehende Flüssigkeit, mit einer ersten eingerückten Betriebsposition und einer zweiten, sich frei drehenden Betriebsposition, enthaltend eine Antriebsnabe und eine angetriebene Nabe (1, 2; 101, 102), wobei diese auf einer mittleren Halterung (105) auf solche Weise angeordnet sind, dass sie sich zusammen um dieselbe Achse (A) drehen und auf solche Weise gegeneinander gehalten werden, dass sie mit Hilfe von Elementen (3) zur Übertragung eines Drehmomentes ein Antriebsmoment übertragen, wobei die genannten Elemente (3) von einer der beiden Naben (1, 2; 101, 102) getragen sind und in Richtung der Trennebene (S) der beiden Naben gedrückt werden, und zwar durch erste Druckmittel (6; 106) in entsprechende Sitze (4) in der anderen Nabe (2; 1; 102; 101), wobei die ersten Druckmittel (6; 106) eine einzeln wirkende lineare Antriebseinheit (8; 108) enthalten, letztere betätigt durch eine unter Druck stehende Flüssigkeit und eine Kraft proportional zu dem Druck der Flüssigkeit entwickelnd, sowie Federmittel (9), die im Betrieb der genannten linearen Antriebseinheit (8) auf solche Weise zugeordnet sind, dass sie sich der Wirkung letzterer entgegensetzen können, wobei die Kupplung **dadurch gekennzeichnet ist, dass** sie eine Vorrichtung (200) zum Verstärken der durch die Antriebseinheit (108) entwickelten Kraft enthält, wobei die Vorrichtung (200) eine Glocke (201) enthält, die axial auf der mittleren Halterung (105) gleitbar ist, zugeordnet der Antriebseinheit (108), wenigstens einen Hebel (203), drehbar um eine Mitte oder einen Drehpunkt (C), beschrieben durch eins seiner Enden (205), das in einem Sitz (110) in der mittleren Halterung (105) angeordnet ist, wobei letztere im Verhältnis zu der Nabe (101) und der Glocke (201) feststehend ist, und dadurch, dass das Ende entgegengesetzt zu dem Ende (205) einen Vorsprung (206) aufweist, wobei dieser Vorsprung (206) im Betrieb der Glocke (201) zugeordnet ist, und dass ein dazwischen liegender und im betrieblich der Nabe (101) zugeordneter Vorsprung (204) vorhanden ist.

2. Kupplung nach Patentanspruch 1, **dadurch gekennzeichnet, dass** die Enden des Hebels (203) und der dazwischen liegende Vorsprung (204) abgerundet sind.

3. Kupplung nach den Patentansprüchen 1 oder 2, **dadurch gekennzeichnet, dass** sie zweite Druckmittel (7) enthält, wobei diese zwischen den Naben (1, 2; 101, 102) auf solche Weise angeordnet sind, dass sie die Naben in einem im wesentlichen ausgerückten Zustand halten.

4. Kupplung nach einem der vorstehenden Patentansprüche, **dadurch gekennzeichnet, dass** die Auslösung der linearen Antriebseinheit (8; 108) das Ausrücken der Naben (1, 2; 101, 102) bewirkt.

5. Kupplung nach einem der vorstehenden Patentansprüche von 1 bis 3, **dadurch gekennzeichnet, dass** die Auslösung der linearen Antriebseinheit (8; 108) das Einrücken der Naben (1, 2; 101, 102) bewirkt.

6. Kupplung nach einem der vorstehenden Patentansprüche von 1 bis 5, **dadurch gekennzeichnet, dass** die lineare Antriebseinheit (8; 108) wenigstens einen Zylinder (81) und einen Kolben (82) enthält.

7. Kupplung nach Patentanspruch 6, **dadurch gekennzeichnet, dass** die lineare Antriebseinheit (8; 108) einen ringförmigen Zylinder (81) enthält, in welchem ein entsprechender ringförmiger Kolben (82) gleitet.

8. Kupplung nach Patentanspruch 6, **dadurch gekennzeichnet, dass** die lineare Antriebseinheit (8; 108) eine Anzahl von Zylindern (82b) enthält, in welchen entsprechende Kolben (82c) gleiten.

9. Kupplung nach einem oder mehreren der vorstehenden Patentansprüche, **dadurch gekennzeichnet, dass** der Vorsprung (206) von dem Drehpunkt (C) in einem Abstand D angeordnet ist, und der Vorsprung (204) von dem Drehpunkt (C) in einem Abstand d angeordnet ist, und dass der Abstand D grösser ist als der Abstand d.

10. Kupplung nach Patentanspruch 9, **dadurch gekennzeichnet, dass** der Abstand D des Vorsprunges (206) von dem Drehpunkt (C) dreimal den Abstand d beträgt, welcher den Vorsprung (204) von dem Drehpunkt (C) trennt.

11. Kupplung nach den Patentansprüchen 1 oder 2, **dadurch gekennzeichnet, dass** die Federmittel (9) aus wenigstens einer direkt auf die Kolben (82; 82c) wirkenden Feder (9a) bestehen.

12. Kupplung nach Patentanspruch 3 oder nach einem der Patentansprüche von 4 bis 10, wenn die Ansprüche von 4 bis 10 von dem Patentanspruch 3 abhängen, **dadurch gekennzeichnet, dass** die zweiten Druckmittel (7) aus wenigstens einer Feder (71) bestehen, die in eine Federführung (72) eingesetzt ist.

13. Drehmomentbegrenzungskupplung, betätigt durch eine unter Druck stehende Flüssigkeit, mit einer ersten eingerückten Betriebsposition und einer zweiten, sich frei drehenden Betriebsposition, enthaltend eine Antriebsnabe und eine angetriebene Nabe (1, 2; 101, 102), wobei diese auf einer mittleren Halterung (105) auf solche Weise angeordnet sind, dass sie sich zusammen um dieselbe Achse (A) drehen und auf solche Weise gegeneinander gehalten werden, dass sie mit Hilfe von Elementen (3) zur Übertragung eines Drehmomentes ein Antriebsmoment übertragen, wobei die genannten Elemente (3) von einer der beiden Naben (1, 2; 101, 102) getragen sind und in Richtung der Trennebene (S) der beiden Naben gedrückt werden, und zwar durch erste Druckmittel (6; 106) in entsprechende Sitze (4) in der anderen Nabe (2; 1; 102; 101), wobei die ersten Druckmittel (6; 106) eine einzeln wirkende lineare Antriebseinheit (8; 108) enthalten, letztere betätigt durch eine unter Druck stehende Flüssigkeit und eine Kraft proportional zu dem Druck der Flüssigkeit entwickelnd, sowie zweite Druckmittel (7), angeordnet zwischen den Naben (1, 2; 101, 102) auf solche Weise, dass sie die Naben in einem im wesentlichen ausgerückten Zustand halten und in entgegengesetzter Richtung zu der Wirkung der linearen Antriebseinheit (8; 108) arbeiten, wobei die Kupplung **dadurch gekennzeichnet ist, dass** sie eine Vorrichtung (200) zum Verstärken der durch die Antriebseinheit (108) entwickelten Kraft enthält, wobei die Vorrichtung (200) eine Glocke (201) enthält, die axial auf der mittleren Halterung (105) gleitbar ist, zugeordnet der Antriebseinheit (108), wenigstens einen Hebel (203), drehbar um eine Mitte oder einen Drehpunkt (C), beschrieben durch eins seiner Enden (205), das in einem Sitz (110) in der mittleren Halterung (105) angeordnet ist, wobei letztere im Verhältnis zu der Nabe (101) und der Glocke (201) feststehend ist, und dadurch, dass das Ende entgegengesetzt zu dem Ende (205) einen Vorsprung (206) aufweist, wobei dieser Vorsprung (206) im Betrieb der Glocke (201) zugeordnet ist, und dass ein dazwischen liegender und im Betrieb der Nabe (101) zugeordneter Vorsprung (204) vorhanden ist.

14. Kupplung nach einem der Patentansprüche von 1 bis 3 oder von 5 bis 10, **dadurch gekennzeichnet, dass** die Wirkung der Federmittel (9) sich über die Nabe (1; 101) der Wirkung der linearen Antriebseinheit (8; 108) entgegensetzt.

15. Kupplung nach einem der vorstehenden Patentansprüche, **dadurch gekennzeichnet, dass** die ersten Druckmittel (6; 106) Reguliermittel (91, 92; 95) haben, um die Vorspannkraft der Federmittel (9) zu verändern.

16. Kupplung nach Patentanspruch 3 oder nach einem der Patentansprüche von 4 bis 10, wenn die Ansprüche von 4 bis 10 von dem Patentanspruch 3 abhängen, oder nach den Patentansprüchen 13 oder 15, **dadurch gekennzeichnet, dass** die zweiten Druckmittel (7) Reguliermittel (75) haben, um ihre eigene Druckkraft zu verändern.

17. Kupplung nach einem der vorstehenden Patentansprüche, **dadurch gekennzeichnet, dass** die Elemente (3) zur Übertragung des Drehmomentes und die entsprechenden Sitze (4) auf solche Weise angeordnet sind, dass die Winkel in der Mitte, ausgedrückt in Graden, zwischen den Achsen eines jeden Paares von aneinandergrenzenden Elementen (3) oder Sitzen (4) aufeinanderfolgend 106, 29, 94, 49, 69, 13 entsprechen, wobei die Grösse des Winkels an der Mitte der Sitze (4), gemessen an dem kleineren Durchmesser, weniger als 15 Grad beträgt und vorzugsweise zwischen 9 und 12 Graden liegen.

## Revendications

1. Un embrayage limiteur de couple actionné par un fluide sous pression, ayant une première position opérationnelle enclenchée et une deuxième position opérationnelle de rotation libre, comprenant un moyeu moteur et un moyeu mené (1, 2; 101, 102) disposés sur un support central (105) de manière à ce qu'ils tournent ensemble autour du même axe (A) et maintenus l'un contre l'autre de manière à transmettre un couple moteur par l'intermédiaire d'éléments (3) de transmission du couple, lesdits éléments (3) étant portés par un des deux moyeux (1; 2; 101; 102) et poussés dans la direction du plan de séparation (S) des deux moyeux par des premiers moyens presseurs (6; 106) dans des logements (4) respectifs prévus dans l'autre moyeu (2; 1; 102; 101), lesdits premiers moyens presseurs (6; 106) comprennent un groupe d'entraînement linéaire (8; 108) à simple effet, actionné par un fluide sous pression et développant une force proportionnelle à la pression du fluide, et des moyens élastiques (9), opérativement associés au groupe d'entraînement linéaire (8) susmentionné de manière à pouvoir opposer l'effet de ce dernier, ledit embrayage étant **caractérisé en ce qu'**il comprend un dispositif (200) destiné à augmenter la force développée par le groupe d'entraînement (108), ledit dispositif (200) comprenant une cloche (201) pouvant coulisser en sens axial sur le support central (105), associée au groupe d'entraînement (108), et au moins un levier (203) pouvant tourner autour d'un centre ou point d'appui (C) défini par une de ses extrémités (205) située dans un logement (110) prévu dans le support central (105), ce dernier étant fixe par rapport au moyeu (101) et à la cloche (201), et **en ce que** l'extrémité opposée à l'extrémité (205) en question présente une saillie (206), cette saillie (206) étant opérativement associée à la cloche (201), et **en ce qu'**une saillie intermédiaire (204) est prévue, opérativement associée au moyeu (101).

2. L'embrayage selon la revendication 1, **caractérisé en ce que** les extrémités du levier (203) et la saillie intermédiaire (204) sont arrondies.

3. L'embrayage selon les revendications 1 ou 2, **caractérisé en ce qu'**il comprend des deuxièmes moyens presseurs (7) disposés entre les moyeux (1, 2; 101, 102) de manière à maintenir ces mêmes moyeux dans une condition essentiellement désenclenchée.

4. L'embrayage selon l'une des revendications précédentes, **caractérisé en ce que** l'effet d'actionnement du groupe d'entraînement linéaire (8; 108) détermine le désenclenchement des moyeux (1, 2; 101, 102).

5. L'embrayage selon l'une des revendications de 1 à 3, **caractérisé en ce que** l'effet d'actionnement du groupe d'entraînement linéaire (8; 108) détermine l'enclenchement des moyeux (1, 2; 101, 102).

6. L'embrayage selon l'une des revendications de 1 à 5, **caractérisé en ce que** ledit groupe d'entraînement linéaire (8; 108) comprend au moins un cylindre (81) et un piston (82).

7. L'embrayage selon la revendication 6, **caractérisé en ce que** ledit groupe d'entraînement linéaire (8; 108) comprend un cylindre annulaire (81) à l'intérieur duquel coulisse un piston annulaire (82) correspondant.

8. L'embrayage selon la revendication 6, **caractérisé en ce que** ledit groupe d'entraînement linéaire (8; 108) comprend une pluralité de cylindres (82b) à l'intérieur desquels coulissent des pistons (82c) correspondants.

9. L'embrayage selon une ou plusieurs des revendications précédentes, **caractérisé en ce que** ladite saillie (206) est située à une distance D du point d'appui (C), que ladite saillie (204) est située à une distance d du point d'appui (C) et que ladite distance D est supérieure à ladite distance d.

10. L'embrayage selon la revendication 9, **caractérisé en ce que** ladite distance D entre la saillie (206) et le point d'appui (C) est égale à trois fois la distance d entre la saillie (204) et le point d'appui (C).

11. L'embrayage selon les revendications 1 ou 2, **caractérisé en ce que** lesdits moyens élastiques (9) sont constitués par au moins un ressort (9a) agissant directement sur les pistons (82; 82c).

12. L'embrayage selon la revendication 3 ou selon une des revendications de 4 à 10, quand les revendications de 4 à 10 dépendent de la revendication 3, **caractérisé en ce que** lesdits deuxièmes moyens presseurs (7) sont constitués par au moins un ressort (71) inséré dans un guide de ressort (72).

13. Un embrayage limiteur de couple actionné par un fluide sous pression, ayant une première position opérationnelle enclenchée et une deuxième position opérationnelle de rotation libre, comprenant un moyeu moteur et un moyeu mené (1, 2; 101, 102) disposés sur un support central (105) de manière à ce qu'ils tournent ensemble autour du même axe (A) et maintenus l'un contre l'autre de manière à transmettre un couple moteur par l'intermédiaire d'éléments (3) de transmission du couple, lesdits éléments (3) étant portés par un des deux moyeux (1; 2; 101; 102) et poussés dans la direction du plan de séparation (S) des deux moyeux par des premiers moyens presseurs (6; 106) dans des logements (4) respectifs prévus dans l'autre moyeu (2; 1; 102; 101), lesdits premiers moyens presseurs (6; 106) comprennent un groupe d'entraînement linéaire (8; 108) à simple effet, actionné par un fluide sous pression et développant une force proportionnelle à la pression du fluide, et des deuxièmes moyens presseurs (7) disposés entre les moyeux (1, 2; 101, 102) de manière à maintenir ces mêmes moyeux dans une condition essentiellement désenclenchée et agissant dans une direction opposée à l'effet du groupe d'entraînement linéaire (8; 108), ledit embrayage étant **caractérisé en ce qu'**il comprend un dispositif (200) destiné à augmenter la force développée par le groupe d'entraînement (108), ledit dispositif (200) comprenant une cloche (201) pouvant coulisser en sens axial sur le support central (105), associée au groupe d'entraînement (108), et au moins un levier (203) pouvant tourner autour d'un centre ou point d'appui (C) défini par une de ses extrémités (205) située dans un logement (110) prévu dans le support central (105), ce dernier étant fixe par rapport au moyeu (101) et à la cloche (201), et **en ce que** l'extrémité opposée à l'extrémité (205) en question présente une saillie (206), cette saillie (206) étant opérativement associée à la cloche (201), et **en ce qu'**une saillie intermédiaire (204) est prévue, opérativement associée au moyeu (101).

14. L'embrayage selon l'une des revendications de 1 à 3, ou de 5 à 10, **caractérisé en ce que** l'action des moyens élastiques (9) oppose l'effet du groupe d'entraînement linéaire (8; 108) par l'intermédiaire du moyeu (1; 101).

15. L'embrayage selon l'une des revendications précédentes, **caractérisé en ce que** lesdits premiers moyens presseurs (6; 106) sont pourvus de moyens de réglage (91, 92; 95) destinés à varier la force de précharge des moyens élastiques (9).

16. L'embrayage selon la revendication 3 ou selon l'une des revendications de 4 à 10, lorsque les revendications de 4 à 10 dépendent de la revendication 3, ou selon les revendications 13 ou 15, **caractérisé en ce que** lesdits deuxièmes moyens presseurs (7) sont pourvus de moyens de réglage (75) destinés à varier leur propre force de pression.

17. L'embrayage selon l'une des revendications précédentes, **caractérisé en ce que** lesdits éléments (3) de transmission du couple et lesdits logements (4) correspondants sont disposés de manière à ce que les angles au centre, exprimés en degrés, entre les axes de chaque paire d'éléments (3) ou de logements (4) adjacents soient consécutivement égaux à 106, 29, 94, 49, 69, 13, la dimension de l'angle au centre des logements (4) mesurée au niveau du plus petit diamètre étant inférieure à 15 degrés et comprise de préférence entre 9 et 12 degrés.
